# EUROPEAN PATENT SPECIFICATION

(11) **EP 4 492 537 B1**
(45) Date of publication and mention of the grant of the patent: **25.06.2025**
(21) Application number: 23216107.5
(22) Date of filing: 13.12.2023
(51) Int. Cl.: H01M 10/613, H01M 10/6568

(54) **ENERGY STORAGE RACK AND ENERGY STORAGE CONTAINER**
ENERGIESPEICHERGESTELL UND ENERGIESPEICHERBEHÄLTER
BÂTI DE STOCKAGE D'ÉNERGIE ET RÉCIPIENT DE STOCKAGE D'ÉNERGIE

(30) Priority: 10.07.2023 CN 202321791879 U
(43) Date of publication of application: 15.01.2025
(73) Proprietor: AESC Japan Ltd., Yokohama-Shi, Kanagawa 220-0012 (JP)
(72) Inventor: HE, Yafei, Pudong New Area Shanghai, 201315 (CN); WANG, Yuxing, Pudong New Area Shanghai, 201315 (CN)
(74) Representative: Becker, Eberhard

(56) References cited:
- CN-A- 113 644 359
- CN-A- 113 707 966
- CN-A- 114 530 643
- CN-U- 216 354 424

## Description

### BACKGROUND

### Technical Field

The disclosure belongs to the technical field of energy storage equipment, and in particular, relates to an energy storage rack and an energy storage container.

### Description of Related Art

In application scenarios such as new energy vehicle power supply, distributed power generation storage, and power grid peak cut, energy storage containers may be quickly integrated and put into operation, among other advantages. Generally, an energy storage container includes a container body and energy storage racks integrated in the container body, and battery packs for storing electrical energy are provided in the energy storage racks. The battery packs have higher temperature requirements when working. When the temperature of one battery pack exceeds its normal operating temperature due to factors such as the ambient temperature or the heat generated by the battery pack itself during charging and discharging, the battery pack needs to be heat exchanged to maintain the stable operation of the energy storage container and extend the service life of the battery pack. At present, the energy storage racks are generally equipped with heat exchange pipelines for transporting heat exchange medium. The heat exchange medium enters each battery pack through the heat exchange pipeline to exchange heat for the battery pack. After heat exchange, the heat exchange medium flows out through the heat exchange pipeline to form a heat exchange cycle. Due to the large number of battery packs in the energy storage racks, the heat exchange pipeline structure is complex and occupies a large space. The energy density of energy storage racks and energy storage container is thus reduced, which is not conducive to the lightweight and miniaturization of the energy storage racks and the energy storage container. Further, due to the large number of battery packs, the battery packs block and obstruct one another, making the connection and maintenance between the heat exchange pipelines and the battery packs difficult. Illustrative of the prior art solutions is CN113707966.

### SUMMARY

In view of the abovementioned shortcomings found in the related art, the disclosure aims to provide an energy storage rack and an energy storage container to solve the problems in the related art that the structure of the heat exchange pipelines is complex and occupies a large space, and the connection and maintenance between the heat exchange pipelines and battery packs are difficult.

The invention providing the solution is given in the claims.

To achieve the above, the disclosure provides an energy storage rack including a frame The frame is provided with a plurality of layers of accommodation spaces stacked in a first direction. The frame includes four vertical beams arranged in the first direction, and the four vertical beams are a first vertical beam, a second vertical beam, a third vertical beam, and a fourth vertical beam. A flow channel is arranged in each of the four vertical beams.

In a second direction perpendicular to the first direction, the first vertical beam and the second vertical beam are located on one side of the accommodation spaces, and the third vertical beam and the fourth vertical beam are located on the other side of the accommodation spaces opposite to the first vertical beam and the second vertical beam.

Two battery packs are arranged in each of the accommodation space of each layer, and the two battery packs respectively are a first battery pack and a second battery pack. The first battery pack is arranged close to the first vertical beam and the second vertical beam, and the second battery pack is arranged close to the third vertical beam and the fourth vertical beam.

The first battery pack has a first inlet for a heat exchange medium to flow in and a first outlet for the heat exchange medium to flow out. The second battery pack has a second inlet for the heat exchange medium to flow in and a second outlet for the heat exchange medium to flow out.

A heat exchange flow channel is provided in each of the battery packs. The heat exchange flow channel of the first battery pack communicates with the first inlet and the first outlet, and the heat exchange flow channel of the second battery pack communicates with the second inlet and the second outlet.

The first inlet and the first outlet are arranged close to the first vertical beam and the second vertical beam, and the second inlet and the second outlet are arranged close to the third vertical beam and the fourth vertical beam. The first inlet communicates with the flow channel of the first vertical beam, and the first outlet communicates with the flow channel of the second vertical beam. The second inlet communicates with the flow channel of the third vertical beam, and the second outlet communicates with the flow channel of the fourth vertical beam.

Optionally, each of the battery packs includes a panel, the first inlet and the first outlet are arranged on the panel of the first battery pack, and the second inlet and the second outlet are arranged on the panel of the second battery pack. The panel of the first battery pack is located on a side surface of the first battery pack close to the first vertical beam and the second vertical beam. The panel of the second battery pack is located on a side surface of the second battery pack close to the third vertical beam and the fourth vertical beam.

Optionally, each of the battery packs includes a housing body and a battery assembly, the battery assembly is arranged in a space surrounded by the housing body and the panel, and the panel and the housing body are detachably connected.

Optionally, the panel is provided with a communication port and a charging and discharging port.

Optionally, the energy storage rack further includes a plurality of connecting pipes corresponding to the first inlet, the first outlet, the second inlet, and the second outlet. The first inlet communicates with the flow channel of the first vertical beam through the corresponding connecting pipe, the first outlet communicates with the flow channel of the second vertical beam through the corresponding connecting pipe, the second inlet communicates with the flow channel of the third vertical beam through the corresponding connecting pipe, and the second outlet communicates with the flow channel of the fourth vertical beam through the corresponding connecting pipe.

Optionally, each of the connecting pipes is a flexible hose.

Optionally, each of the first inlet, the first outlet, the second inlet, and the second outlet is provided with a quick connector. Each of the first inlet, the first outlet, the second inlet, and the second outlet communicates with the corresponding connecting pipe through the quick connector.

Optionally, the frame further includes connecting members, and the connecting members are connected to the four vertical beams.

There are a plurality of connecting members, and the connecting members are sequentially arranged in the first direction and form the accommodation spaces in the frame.

Optionally, the frame further includes auxiliary supporting beams arranged in the first direction and connected to the connecting members.

Optionally, a general communicating port is provided on an end portion of each of the vertical beams corresponding to the vertical beam, and the general communicating port communicates with the flow channel in the vertical beam.

The disclosure further provides an energy storage container including a container body and a plurality of energy storage racks arranged in the container body according to anyone of the above. The energy storage racks are arranged side by side in a third direction perpendicular to the first direction and the second direction.

Optionally, the first vertical beam is spaced apart from the second vertical beam in the third direction, and the first battery pack enters and exits the accommodation space through a gap between the first vertical beam and the second vertical beam. The third vertical beam is spaced apart from the fourth vertical beam in the third direction, and the second battery pack enters and exits the accommodation space through a gap between the third vertical beam and the fourth vertical beam.

Optionally, the two vertical beams that are close to each other between two adjacent energy storage racks are combined into an integrated vertical beam, and the two flow channels in the integrated vertical beam are separated from each other.

Optionally, container doors are provided on a side surface of the container body relative to the energy storage racks in the second direction.

Optionally, the energy storage racks are arranged side by side into two energy storage aggregates spaced apart from each other in the second direction, and a gap between the two energy storage aggregates is used for an operator to pass through.

As described above, beneficial effects provided by the disclosure include the following. Since each of the vertical beams is provided with the flow channel and the flow channel communicates with the heat exchange flow channel of the corresponding battery pack, the heat exchange medium may enter the battery pack through the vertical beam to exchange heat with the battery pack, and the heat exchange medium after heat exchange may flow out from the vertical beam. The arrangement of the flow channel in each of the vertical beams replaces part of the heat exchange pipeline, so that the structure of the energy storage rack is simplified, the space occupied by the heat exchange pipelines is reduced, and the material costs and installation costs of the pipelines are lowered. It is beneficial to the miniaturization and lightweight of the energy storage rack and improves the energy density of the energy storage rack. In the meantime, the first vertical beam and the second vertical beam are located on one side of the accommodation spaces, the third vertical beam and the fourth vertical beam are located on the other side of the accommodation spaces opposite to the first vertical beam and the second vertical beam, the first battery pack is arranged close to the first vertical beam and the second vertical beam and the second battery pack is arranged close to the third vertical beam and the fourth vertical beam, that is, the two battery packs are arranged close to the corresponding vertical beams. Therefore, when the first battery pack is being connected to the first vertical beam and the second vertical beam or when the first battery pack is being maintained, the connection or the maintenance may be made from the side of the frame corresponding to the first vertical beam and the second vertical beam. When the second battery pack is being connected to the third vertical beam and the fourth vertical beam or when the second battery pack is being maintained, the connection or the maintenance may be made from the side of the frame corresponding to the third vertical beam and the fourth vertical beam, which is simple and convenient. Further, the two battery packs are close to the corresponding vertical beams, so that the two battery packs are far away from each other, the interference between the two battery packs is reduced, and connection between the battery packs and the vertical beams and maintenance on the battery packs can be easily performed.

### BRIEF DESCRIPTION OF THE DRAWINGS

FIG. 1 is a first schematic three-dimensional view of a structure of an energy storage rack according to an embodiment of the disclosure.
FIG. 2 is a schematic cross-sectional view of the structure of the energy storage rack according to an embodiment of the disclosure.
FIG. 3 is a second schematic three-dimensional view of the structure of the energy storage rack according to an embodiment of the disclosure.
FIG. 4 is a schematic side view of the structure of the energy storage rack in a second direction according to an embodiment of the disclosure.
FIG. 5 is a schematic three-dimensional view of a structure of a frame according to an embodiment of the disclosure.
FIG. 6 is a schematic side view of the structure of the frame in the second direction according to an embodiment of the disclosure.
FIG. 7 is a schematic local enlargement view of FIG. 6.
FIG. 8 is a schematic local enlargement view of FIG. 1.
FIG. 9 is a schematic local enlargement view of FIG. 4.
FIG. 10 is a schematic exploded view of a structure of a battery pack according to an embodiment of the disclosure.
FIG. 11 is a schematic view of a structure of a panel on a first battery pack according to an embodiment of the disclosure.
FIG. 12 is a schematic side view of the structure of the energy storage rack in a third direction according to an embodiment of the disclosure.
FIG. 13 is a schematic view of a position of a general communicating port according to an embodiment of the disclosure.
FIG. 14 is a schematic three-dimensional view of a structure of an energy storage aggregate according to an embodiment of the disclosure.
FIG. 15 is a schematic side view of the structure of the energy storage aggregate in the second direction according to an embodiment of the disclosure.
FIG. 16 is a schematic cross-sectional view of a structure of an integrated vertical beam according to an embodiment of the disclosure.
FIG. 17 is a schematic three-dimensional view of a structure of an energy storage container according to an embodiment of the disclosure.
FIG. 18 is a schematic side view of the structure of the energy storage container in the second direction according to an embodiment of the disclosure.
FIG. 19 is a schematic three-dimensional view of arrangement of energy storage aggregates in the energy storage container according to an embodiment of the disclosure.
FIG. 20 is a schematic top view of the arrangement of the energy storage aggregates in the energy storage container according to an embodiment of the disclosure.
FIG. 21 is a schematic side view of the arrangement of the energy storage aggregates in the energy storage container according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification.

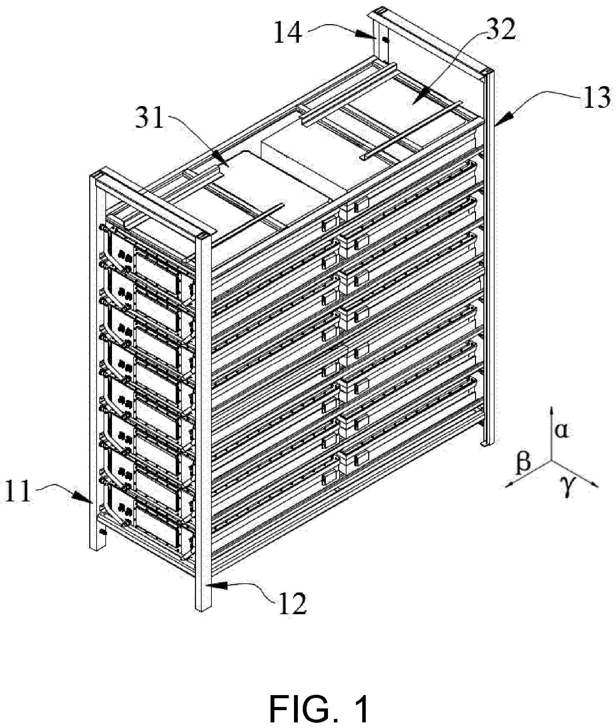

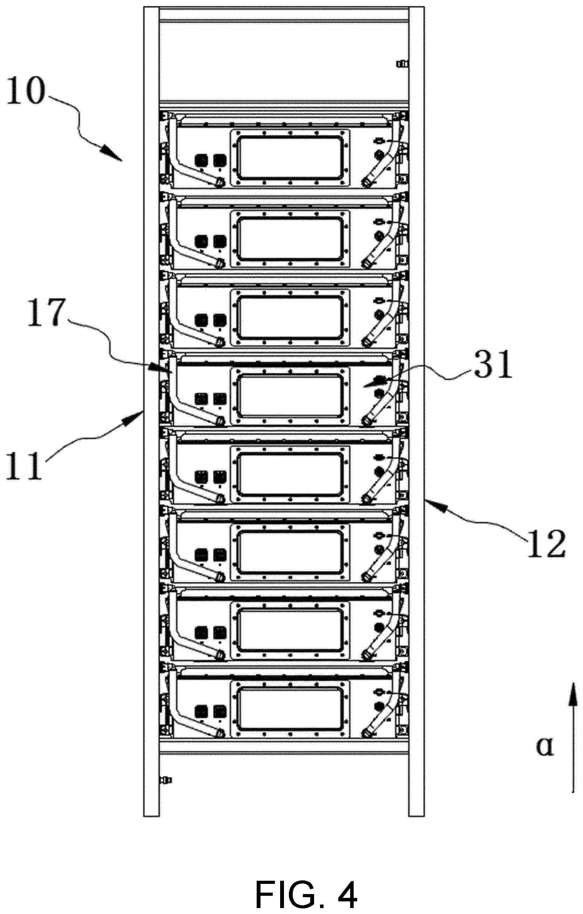

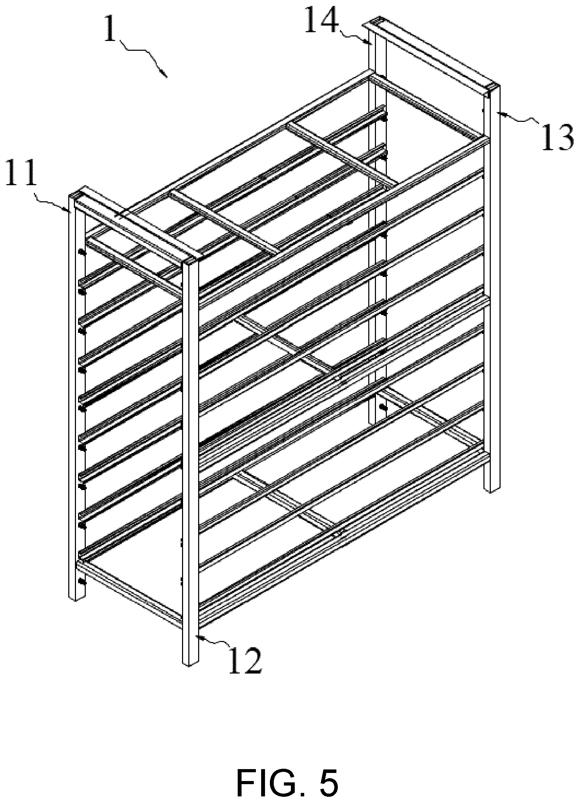

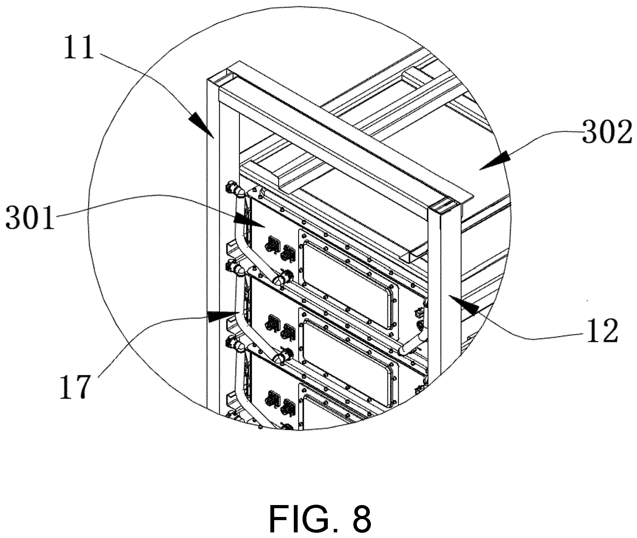

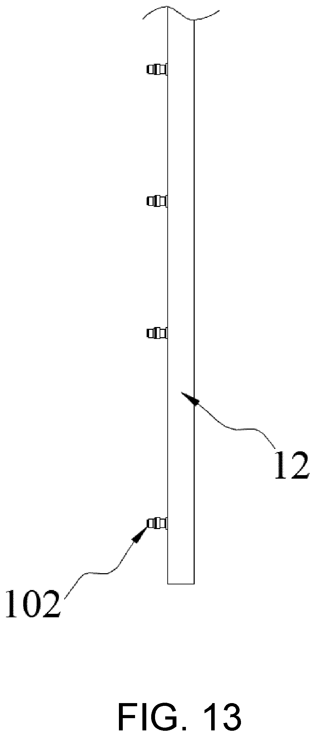

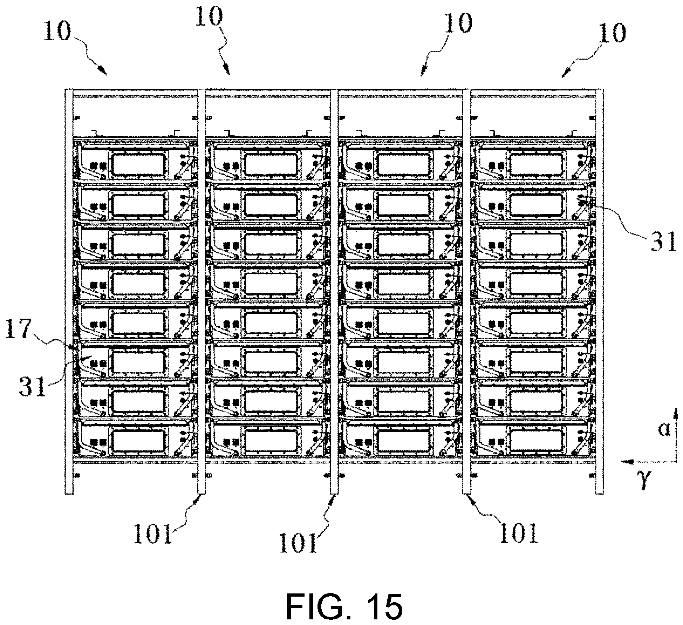

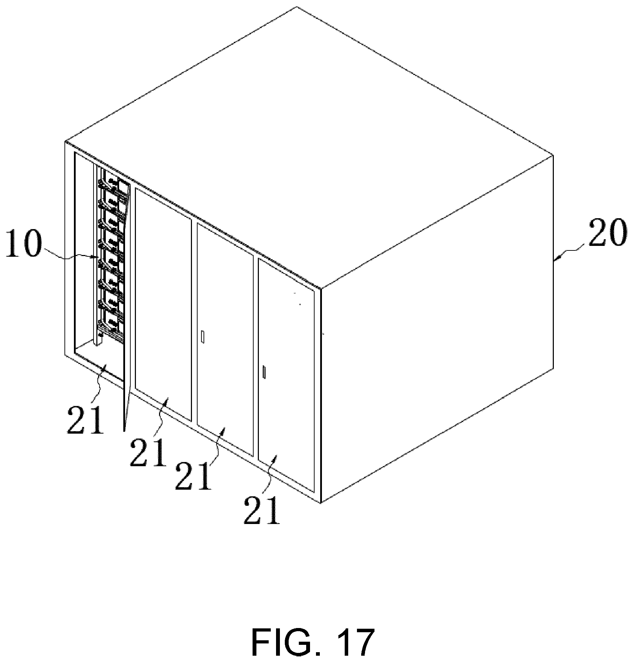

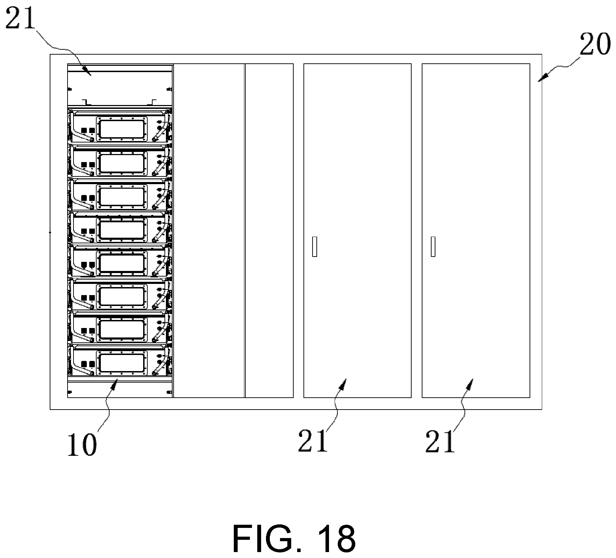

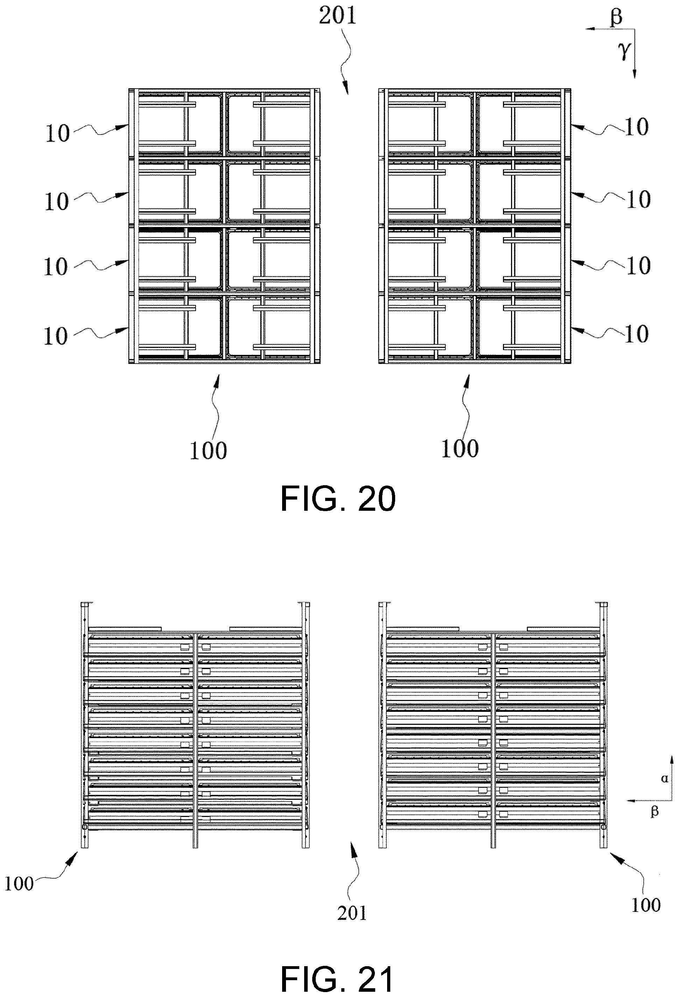

With reference to FIG. 1 to FIG. 21, it should be noted that the structures, scales, sizes, etc. shown in the accompanying drawings in the specification are only to be used together with the content disclosed in the specification for a person having ordinary skill in the art to comprehend and read, are not intended to define the defining conditions of the implementation of the disclosure, and therefore have no technical significance. Any structural modification, proportional relationship change, or size adjustment, without affecting the effects and objectives that can be achieved by the disclosure, should still fall within the scope of the technical content disclosed in the disclosure. Further, terms such as "upper", "lower", "left", "right", "middle", and "one" quoted in this specification are only for the convenience of description and are not used to define the applicable scope of the disclosure. The change or adjustment of its relative relationship should also be regarded as the applicable scope of the disclosure without substantive change of the technical content.

With reference to FIG. 1 to FIG. 13, this embodiment provides an energy storage rack 10 including a frame 1 provided with a plurality of layers of accommodation spaces 18 stacked in a first direction α. The frame 1 includes four vertical beams all arranged in the first direction α, and a flow channel 111 is arranged in each of the four vertical beams.

To be specific, the fourth vertical beams respectively are a first vertical beam 11, a second vertical beam 12, a third vertical beam 13, and a fourth vertical beam 14. In a second direction β, the first vertical beam 11 and the second vertical beam 12 are located on one side of the accommodation spaces 18, and the third vertical beam 13 and the fourth vertical beam 14 are located on the other side of the accommodation spaces 18 relative to the first vertical beam 11 and the second vertical beam 12. The second direction β is perpendicular to the first direction α.

Two battery packs are arranged in each of the accommodation spaces, and the two battery packs are a first battery pack 31 and a second battery pack 32. The first battery pack 31 is arranged close to the first vertical beam 11 and the second vertical beam 12, and the second battery pack 32 is arranged close to the third vertical beam 13 and the fourth vertical beam 14.

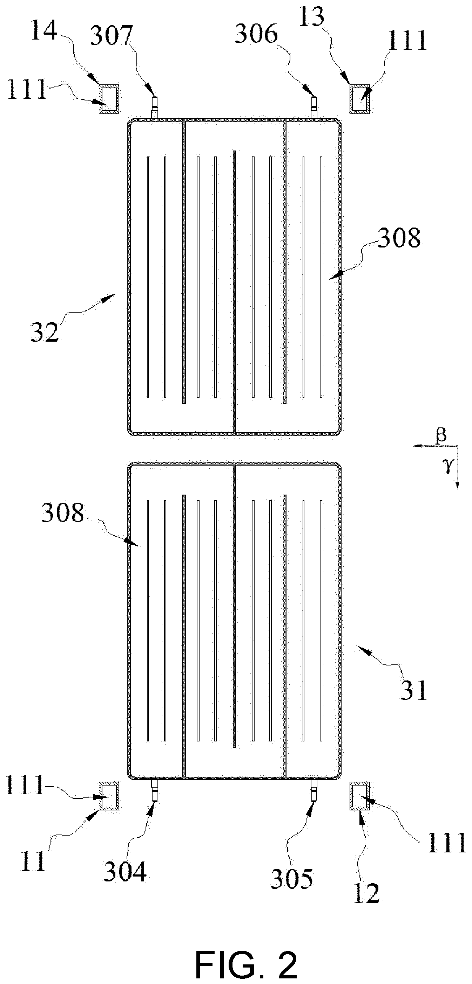

As shown in FIG. 2, a heat exchange flow channel 308 is provided in each of the first battery pack 31 and the second battery pack 32. The first battery pack 31 has a first inlet 304 for a heat exchange medium to flow in and a first outlet 305 for the heat exchange medium to flow out, and the heat exchange flow channel 308 of the first battery pack 31 communicates with the first inlet 304 and the first outlet 305. The second battery pack 32 has a second inlet 306 for the heat exchange medium to flow in and a second outlet 307 for the heat exchange medium to flow out, and the heat exchange flow channel 308 of the second battery pack 32 communicates with the second inlet 306 and the second outlet 307.

The first inlet 304 and the first outlet 305 of the first battery pack 31 are arranged close to the first vertical beam 11 and the second vertical beam 12, and the second inlet 306 and the second outlet 307 of the second battery pack 32 are arranged close to the third vertical beam 13 and the fourth vertical beam 14.

The first inlet 304 communicates with the flow channel 111 of the first vertical beam 11, and the first outlet 305 communicates with the flow channel 111 of the second vertical beam 12. The second inlet 306 communicates with the flow channel 111 of the third vertical beam 13, and the second outlet 307 communicates with the flow channel 111 of the fourth vertical beam 14.

The heat exchange flow channels 308 are used for heat exchange with inner portions of the battery packs, so that the temperature of the battery packs may be kept in a suitable temperature range, and that the energy storage efficiency, charging and discharging efficiency, and safety performance of the battery packs may be kept.

In some embodiments, the heat exchange flow channels 308 may be arranged in heat exchange components such as heat exchange plates, and the heat exchange components are separately arranged and assembled in the battery packs, so assembly and maintenance may be easily performed. However, the presence of the heat exchange components increases the number of components and parts in the battery packs and occupies a large space, so that the assembly steps are increased and the space utilization rate within a housing body 302 is also reduced.

In some other embodiments, the heat exchange flow channels 308 may be integrated into an inner wall of the housing body 302, such as bottom portions of the battery packs, and do not need to be separately arranged. In this way, the number of components and parts in the battery packs is reduced, the assembly steps are simplified, and the available spaces in the battery packs are increased, so that the energy density of the battery packs is increased. However, the heat exchange flow channels 308 are integrated into the inner wall of the housing body 302, so that the processing difficulty of the housing body 302 increases, and replacement and maintenance of the heat exchange flow channels 308 may not be easily performed.

In some embodiments, only some of the accommodation spaces 18 are provided with two battery packs, and the remaining accommodation spaces 18 are not provided with a battery pack or are provided with only one battery pack. In this embodiment, each accommodation space 18 is provided with the first battery pack 31 and the second battery pack 32. The specific number of battery packs in the energy storage rack 10 may be set according to the energy storage requirements of the energy storage rack 10. When two battery packs are installed in each of the accommodation spaces 18, the energy storage rack 10 has the largest energy storage capacity and the highest energy density.

The flow channel 111 is provided in each of the vertical beams, and the flow channel 111 communicates with the heat exchange flow channel 308 of the corresponding battery pack. Therefore, the heat exchange medium may enter the battery pack through the vertical beam to exchange heat with the battery pack, and the heat exchange medium after heat exchange may also flow out from the vertical beam. The arrangement of the flow channel 111 in each of the vertical beams replaces part of a heat exchange pipeline, so that the structure of the energy storage rack 10 is simplified, the space occupied by the heat exchange pipelines is reduced, and the material costs and installation costs of the pipelines are lowered. It is beneficial to the miniaturization and lightweight of the energy storage rack 10 and improves the energy density of the energy storage rack 10.

The first battery pack 31 is arranged close to the first vertical beam 11 and the second vertical beam 12 and the second battery pack 32 is arranged close to the third vertical beam 13 and the fourth vertical beam 14, that is, the two battery packs are arranged close to the corresponding vertical beams. When the first battery pack 31 is being connected to the first vertical beam 11 or the second vertical beam 12 or when the first battery pack 31 is being maintained, the connection or the maintenance may be made from the side of the frame 1 corresponding to the first vertical beam 11 and the second vertical beam 12. When the second battery pack 32 is being connected to the third vertical beam 13 or the fourth vertical beam 14 or when the second battery pack 32 is being maintained, the connection or the maintenance may be made from the side of the frame 1 corresponding to the third vertical beam 13 and the fourth vertical beam 14, which is simple and convenient. Further, the two battery packs are close to the corresponding vertical beams, so that the two battery packs are far away from each other, interference between the two battery packs is reduced, and connection and maintenance may be easily performed. In this embodiment, the vertical beams are made of profiles, and the flow channels 111 in the vertical beams may be directly extruded during profile extrusion without additional processing, so the overall costs are low.

In some embodiments, the first outlet 305 is arranged close to the first vertical beam 11, the first inlet 304 is arranged close to the second vertical beam 12, the second outlet 307 is arranged close to the third vertical beam 13, and the second inlet 306 is arranged close to the fourth vertical beam 14. In this embodiment, the first outlet 305 is arranged close to the second vertical beam 12, the first inlet 304 is arranged close to the first vertical beam 11, the second inlet 306 is arranged close to the third vertical beam 13, and the second outlet 307 is arranged close to the fourth vertical beam 14. The first inlet 304, the first outlet 305, the second inlet 306, and the second outlet 307 are close to the connected vertical beams, so that connection or maintenance between the vertical beams and the corresponding battery packs may be easily performed.

In some embodiments, the first direction α is set in a horizontal direction, that is, the multi-layer accommodation spaces 18 are stacked in sequence in the horizontal direction. As shown in FIG. 1, FIG. 2, and FIG. 4, in this embodiment, the first direction α is set in a vertical direction, the second direction β is set in the horizontal direction, and the multi-layer accommodation spaces 18 are stacked in sequence in the vertical direction, so that the space in a height direction may be fully utilized, and the space utilization of the energy storage rack 10 may be improved. Further, when the battery packs are installed or disassembled, the battery packs may enter the accommodation spaces 18 in the horizontal direction, which is convenient for an operator to operate.

As shown in FIG. 2 and FIG. 8 to FIG. 11, in this embodiment, each of the battery packs includes a panel 301, the first inlet 304 and the first outlet 305 of the first battery pack 31 are arranged on the panel 301 of the first battery pack 31, and the second inlet 306 and the second outlet 307 of the second battery pack 32 are arranged on the panel 301 of the second battery pack 32. The side where the panel 301 is located is an operating side of each of the battery pack. The panel 301 of the first battery pack 31 is located on a side surface of the first battery pack 31 close to the first vertical beam 11 and the second vertical beam 12, and the panel 301 of the second battery pack 32 is located on a side surface of the second battery pack 32 close to the third vertical beam 13 and the fourth vertical beam 14. Operations such as connecting and maintaining the panel 301 of the first battery pack 31 may be performed from the positions of the first vertical beam 11 and the second vertical beam 12, and operations such as connecting and maintaining the panel 301 of the second battery pack 32 may be performed from the positions of the third vertical beam 13 and the fourth vertical beam 14, so these operations may be easily performed.

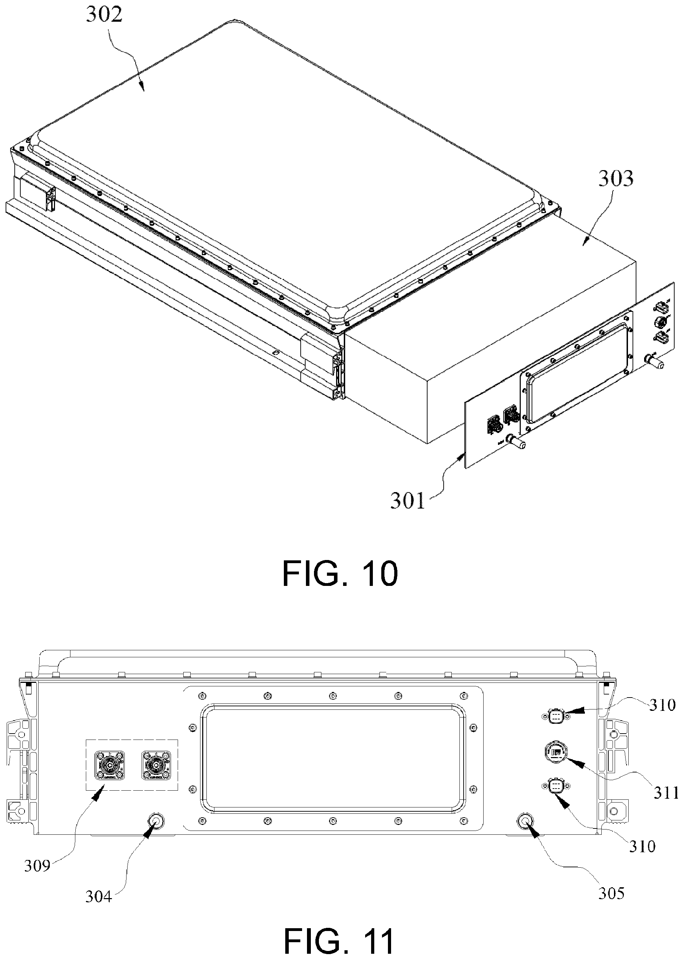

In this embodiment, each of the battery packs includes a charging and discharging port 309 and a communication port 310. As shown in FIG. 11, the charging and discharging port 309 and the communication port 310 are also arranged on the panel 301. To be specific, the charging and discharging port 309 is a high-voltage port including a charging port and a discharging port. The charging port is used to charge the battery pack, and the discharging port is used to output electric energy from the battery pack. The communication port 310 is a low-voltage port, and communication information, sensor detection results, and low-voltage power supply are all output through the communication port 310. In this embodiment, an explosion-proof valve 311 of the battery pack is also arranged on the panel 301. The explosion-proof valve 311 may relieve the pressure of the battery pack when the pressure in the battery pack exceeds the safety threshold, prevent the battery pack from exploding, and improve the safety performance of the battery pack.

As shown in FIG. 10, in this embodiment, each of the battery packs includes the housing body 302 and a battery assembly, the panel 301 and the housing body 302 is detachably connected, and the battery assembly is arranged in an internal space surrounded by the housing body 302 and the panel 301. The battery assembly is used to store electric energy, and the housing body 302 and the panel 301 are used to fix, support, and protect the battery assembly. The panel 301 and the housing body 302 are arranged separately, and the panel 301 and the housing body 302 are detachably connected, so maintenance and replacement of the panel 301 may be easily performed.

To be specific, in this embodiment, the housing body 302 has an installation opening through which the battery assembly may enter and exit the housing body 302, and the panel 301 is detachably connected onto the installation opening. When the panel 301 is connected to the installation opening, the housing body 302 and the panel 301 are combined to form a complete housing body. When the panel 301 is detached, the battery assembly may enter and exit the housing body 302 through the installation opening, so that the battery assembly may be easily repaired and replaced.

As shown in FIG. 2, FIG. 8, and FIG. 9, the energy storage rack 10 further includes a plurality of connecting pipes 17. The first inlet 304 communicates with the flow channel 111 of the first vertical beam 11 through the corresponding connecting pipe 17, the first outlet 305 communicates with the flow channel 111 of the second vertical beam 12 through the corresponding connecting pipe 17, the second inlet 306 communicates with the flow channel 111 of the third vertical beam 13 through the corresponding connecting pipe 17, and the second outlet 307 communicates with the flow channel 111 of the fourth vertical beam 14 through the corresponding connecting pipe 17. The first inlet 304, the first outlet 305, the second inlet 306, and the second outlet 307 may be connected to the corresponding vertical beams through the corresponding connecting pipes 17, so that compared with the direct connection between the battery packs and the vertical beams, the relative position requirements between the battery packs and the vertical beams may be reduced, and the difficulty of processing and installation may be lowered. Further, the corresponding moderate increase in the distance between the battery packs and the vertical beams is conducive to increasing the operating space when the battery packs are connected to the vertical beams.

To be specific, each of the connecting pipes 17 is a flexible hose in this embodiment. The flexible hose may be bent and deformed according to the installation position, so that the position accuracy and processing accuracy requirements between the battery packs and the corresponding vertical beams are lowered, and the connection between the vertical beams and battery packs may be easily performed.

In this embodiment, each of the first inlet 304, the first outlet 305, the second inlet 306, and the second outlet 307 is provided with a quick connector. Each of the first inlet 304, the first outlet 305, the second inlet 306, and the second outlet 306 communicates with the corresponding connecting pipe 17 through the quick connector.

In this embodiment, each of the vertical beams is also provided with a quick connector communicating with the flow channel 111 in the vertical beam, and the connecting pipes 17 communicate with the flow channels 111 in the vertical beams through the quick connectors.

In actual situations, one end of each of the connecting pipes 17 may be connected to the corresponding vertical beam in advance. When the battery packs are installed in accommodation chambers, the other ends of the connecting pipes 17 are connected to the quick connectors on the battery packs, so the heat exchange flow channels 308 in the battery packs may communicate with the corresponding flow channels 111 in the vertical beams, which is convenient and fast.

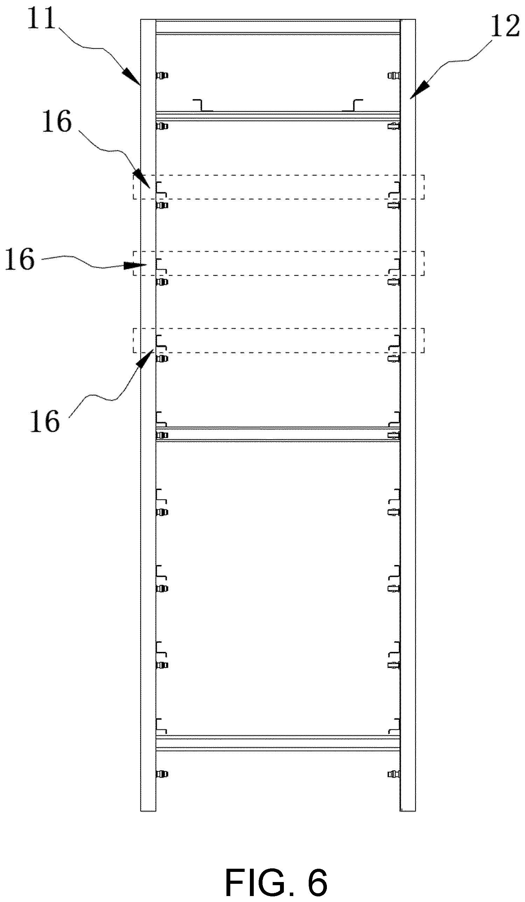

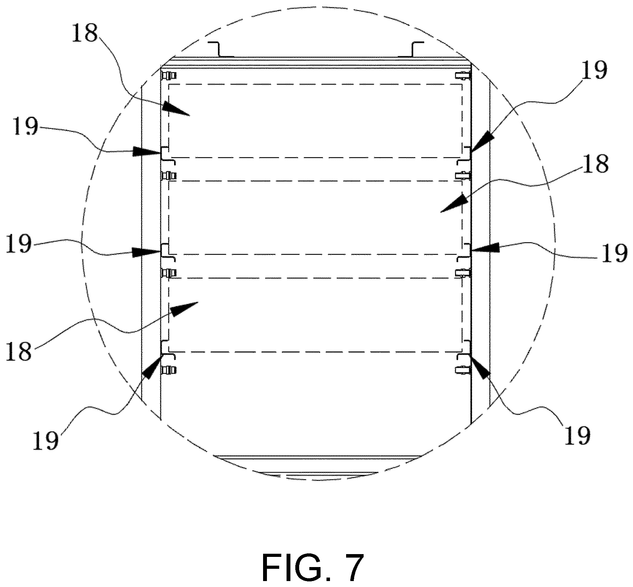

As shown in FIG. 6 and FIG. 7, in this embodiment, the frame further includes connecting members 16, and the connecting members 16 are connected to the four vertical beams. There are a plurality of connecting members 16, and the plurality of connecting members 16 are sequentially arranged in the first direction α and form the accommodation spaces 18 in the frame.

The connecting members 16 may be in the form of plates or shelves, and the connecting members 16 divide the space in the frame into the plurality of accommodation spaces 18. In this embodiment, the connecting members 16 include two opposite supporting cross beams 19. One supporting cross beam 19 is connected to the first vertical beam 11 and the fourth vertical beam 14, and the other supporting cross beam 19 is connected to the second vertical beam 12 and the third vertical beam 13. When the battery packs are installed in the accommodation spaces 18, the supporting cross beams 19 support the battery packs.

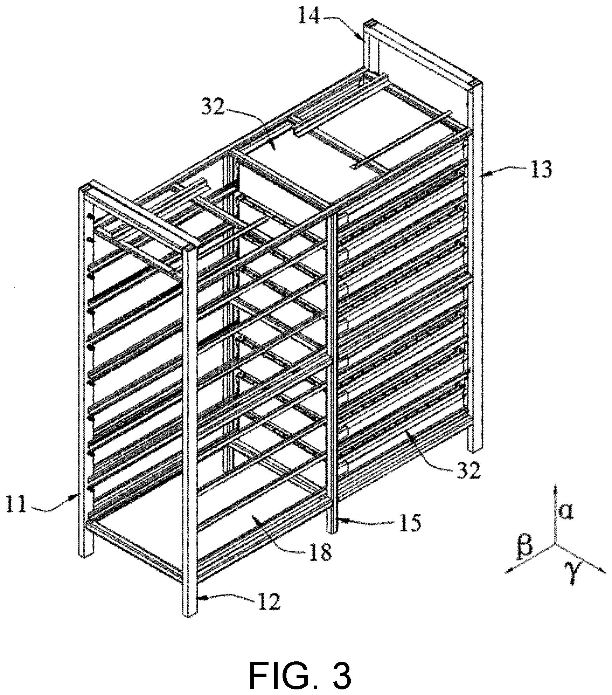

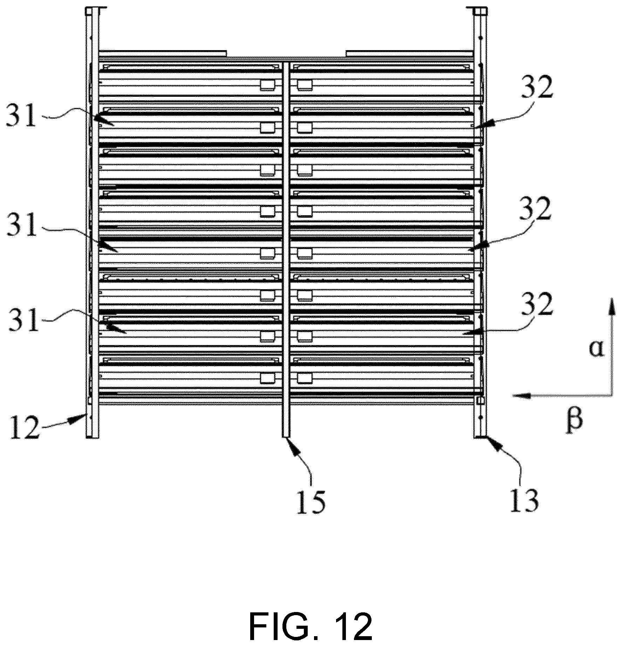

As shown in FIG. 3 and FIG. 12, in this embodiment, the frame further includes auxiliary supporting beams 15 arranged in the first direction α and connected to the connecting members 16. The auxiliary supporting beams 15 may increase the structural strength of the frame in the first direction α, so that the frame may carry more battery packs in the first direction α. In some embodiments, the frame may also include other reinforcing beams to enhance the structural strength of the frame and avoid deformation of the frame.

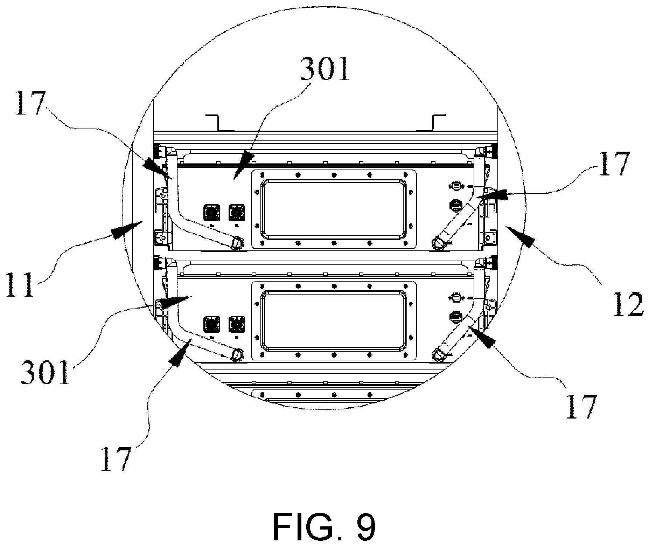

As shown in FIG. 9, in this embodiment, a general communicating port 102 is provided on an end portion of each of the vertical beams corresponding to the vertical beam, and the general communicating port 102 communicates with the flow channel in the vertical beam. The general communicating port 102 is configured to communicate with a medium input pipeline or a medium output pipeline. The heat exchange medium may enter the flow channel of the vertical beam through the general communicating port 102 and then enters each battery pack through the flow channel for heat exchange. The heat exchange medium after heat exchange flows out from each battery pack, enters the flow channel of another vertical beam, and is discharged from the general communicating port 102 of the vertical beam. The general communicating port 102 is provided corresponding to the end portion of the vertical beam, avoiding the battery pack, so that the general communicating port 102 may be easily connected to the medium input pipeline or the medium output pipeline.

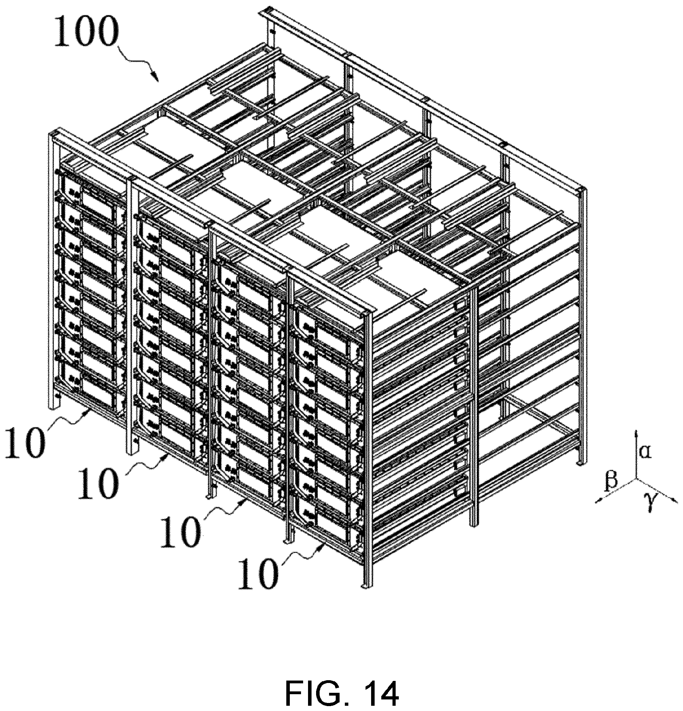

As shown in FIG. 14 to FIG. 21, the disclosure further provides an energy storage container including a container body 20 and a plurality of the abovementioned energy storage racks 10 arranged in the container body 20. The energy storage racks 10 are arranged side by side in a third direction γ perpendicular to the first direction α and the second direction β.

In this embodiment, the direction in which the plurality of energy storage racks 10 are arranged side by side is perpendicular to the direction in which the two battery packs in the energy storage rack 10 are connected. Since the battery packs are inspected from the second direction β and each energy storage rack 10 is arranged in the third direction γ, the panels 301 of the battery packs are all exposed. Adjacent energy storage racks 10 may not block the maintenance paths of the battery packs, so the maintenance of the battery packs may be easily performed.

In this embodiment, the first vertical beam 11 is spaced apart from the second vertical beam 12 in the third direction γ, and the first battery pack 31 enters and exits the accommodation space 18 through a gap between the first vertical beam 11 and the second vertical beam 12. The third vertical beam 13 is spaced apart from the fourth vertical beam 14 in the third direction γ, and the second battery pack 32 enters and exits the accommodation space 18 through a gap between the third vertical beam 13 and the fourth vertical beam 14. Since the plurality of energy storage racks 10 are arranged side by side in the second direction β, the adjacent energy storage racks 10 may not block the detachment and installation paths of the battery packs, so the installation and detachment of the battery packs may be easily performed.

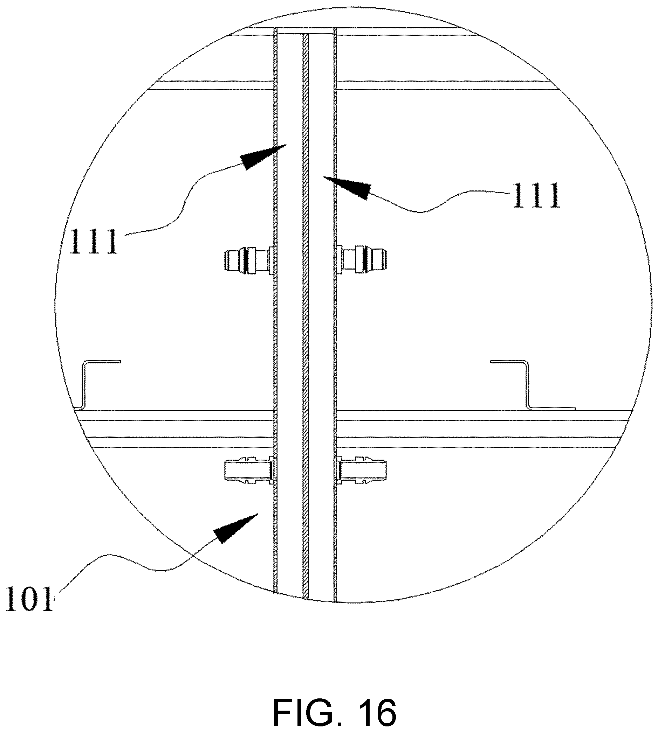

As shown in FIG. 16, in this embodiment, the two vertical beams that are close to each other between two adjacent energy storage racks 10 are combined into an integrated vertical beam 101, and the two flow channels 111 in the integrated vertical beam 101 are separated from each other. The two flow channels 111 in the integrated vertical beam 101 may be obtained at the same time during extrusion and forming without being additionally arranged, so the structure of the frame is simplified, and the material costs of the frame are also decreased.

Container doors 21 are provided on a side surface of the container body 20 relative to the energy storage racks 10 in the second direction β. The container doors 21 are opened on the side surface of the container body 20 in the second direction β. In this way, after the container doors 21 are opened, the panels 301 of the battery packs, that is, the connection positions between the battery packs and the corresponding vertical beams, are exposed in the container doors 21, so an operator can operate the battery packs through the container doors 21.

In this embodiment, the container body 20 is provided with two opposite container doors 21 corresponding to the same energy storage rack 10, and the two container doors 21 are provided corresponding to both sides of the energy storage rack 10 in the second direction β. When there are multiple energy storage racks 10, the number of container doors 21 also increases accordingly. To be specific, in this embodiment, there are four energy storage racks 10 and eight container doors 21, and the eight container doors 21 are arranged on both sides of the container body 20.

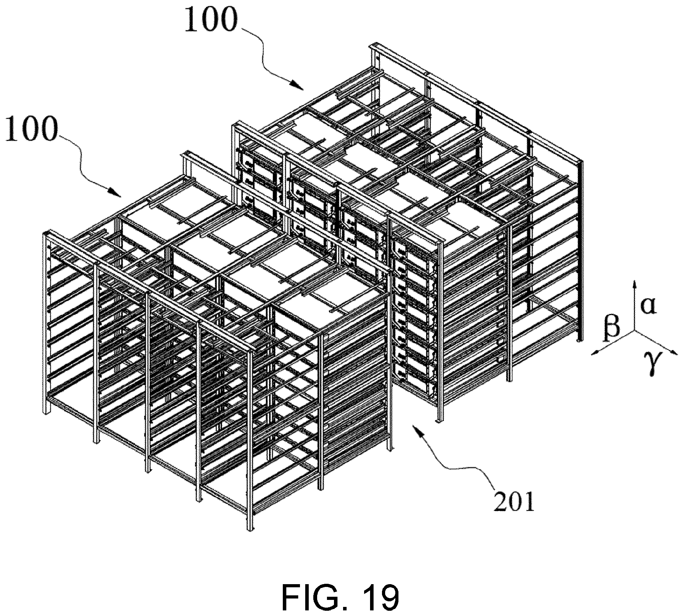

As shown in FIG. 19 to FIG. 21, the energy storage racks 10 are arranged side by side into two energy storage aggregates 100 spaced apart from each other in the second direction β, and a gap between the two energy storage aggregates 100 is an aisle 201 for an operator to pass through. The operator may connect or inspect the panels 301 of the battery packs located on the outward sides of the two energy storage aggregates 100 through the container doors 21 outside the container body 20. The operator may also perform connection or maintenance operations through the panels 301 of the battery packs located on both sides of the aisle 201. In this way, all battery packs may be connected or inspected without additional detachment of the frame or the container body 20, which is simple and convenient.

In view of the foregoing, in the energy storage rack and the energy storage container provided by the embodiments, since each of the vertical beams is provided with the flow channel 111 and the flow channel 111 communicates with the heat exchange flow channel of the corresponding battery pack, the heat exchange medium may enter the battery pack through the vertical beam to exchange heat with the battery pack, and the heat exchange medium after heat exchange may flow out from the vertical beam. The arrangement of the flow channel 111 in each of the vertical beams replaces part of the heat exchange pipeline, so that the structure of the energy storage rack 10 is simplified, the space occupied by the heat exchange pipelines is reduced, and the material costs and installation costs of the pipelines are lowered. It is beneficial to the miniaturization and lightweight of the energy storage rack 10 and improves the energy density of the energy storage rack 10.

In the meantime, the first vertical beam 11 and the second vertical beam 12 are located on one side of the accommodation spaces 18, the third vertical beam 13 and the fourth vertical beam 14 are located on the other side of the accommodation spaces 18 relative to the first vertical beam 11 and the second vertical beam 1, the first battery pack 31 is arranged close to the first vertical beam 11 and the second vertical beam 12, and the second battery pack 32 is arranged close to the third vertical beam 13 and the fourth vertical beam 14. That is, the four vertical beams are all arranged on the outside of the frame, and the two battery packs are close to the corresponding vertical beams. When the vertical beams and the battery packs are to be connected or maintenance on the battery packs is to be performed, the connection or maintenance may be carried out from the side of the frame where the vertical beams close to the battery packs are located, which is simple and convenient. Further, the two battery packs are close to the corresponding vertical beams, so that the two battery packs are far away from each other, the interference between the two battery packs is reduced, and connection between the battery packs and the vertical beams and maintenance on the battery packs may be easily performed.

The above-mentioned embodiments only illustrate the principles and effects of the disclosure, but are not intended to limit the disclosure. A person having ordinary skill in the art can modify or change the abovementioned embodiments without departing from the scope of the invention as given in the claims.

### List of Reference Numerals

1: frame,
10: energy storage rack,
11: first vertical beam,
12: second vertical beam,
13: third vertical beam,
14: fourth vertical beam,
15: auxiliary supporting beam,
16: connecting member,
17: connecting pipe,
18: accommodation space,
19: supporting cross beam,
20: container body,
21: container door,
31: first battery pack,
32: second battery pack,
301: panel,
302: housing body,
303: battery assembly,
304: first inlet,
305: first outlet,
306: second inlet,
307: second outlet,
308: heat exchange flow channel,
309: charging and discharging port,
310: communication port,
311: explosion-proof valve,
100: energy storage aggregate,
101: integrated vertical beam,
102: general communicating port,
111: flow channel,
201: aisle,
α: first direction,
β: second direction,
γ: third direction.

## Claims

1. An energy storage rack (10), comprising:
a frame (1) provided with a plurality of layers of accommodation spaces (18) stacked in a first direction (α), wherein the frame (1) comprises four vertical beams arranged in the first direction (α), the four vertical beams are a first vertical beam (11), a second vertical beam (12), a third vertical beam (13), and a fourth vertical beam (14), and a flow channel (111) is arranged in each of the four vertical beams,
in a second direction (β) perpendicular to the first direction (α), the first vertical beam (11) and the second vertical beam (12) are located on one side of the accommodation spaces (18), and the third vertical beam (13) and the fourth vertical beam (14) are located on the other side of the accommodation spaces (18) opposite to the first vertical beam (11) and the second vertical beam (12),
two battery packs (31, 32) are arranged in each of the accommodation space (18) of each layer, the two battery packs (31, 32) respectively are a first battery pack (31) and a second battery pack (32), the first battery pack (31) is arranged close to the first vertical beam (11) and the second vertical beam (12), and the second battery pack (32) is arranged close to the third vertical beam (13) and the fourth vertical beam (14),
the first battery pack (31) has a first inlet (304) for a heat exchange medium to flow in and a first outlet (305) for the heat exchange medium to flow out, and the second battery pack (32) has a second inlet (306) for the heat exchange medium to flow in and a second outlet (307) for the heat exchange medium to flow out,
a heat exchange flow channel (308) is provided in each of the battery packs, the heat exchange flow channel (308) of the first battery pack (31) communicates with the first inlet (304) and the first outlet (305), and the heat exchange flow channel (308) of the second battery pack (32) communicates with the second inlet (306) and the second outlet (307),
the first inlet (304) and the first outlet (305) are arranged close to the first vertical beam (11) and the second vertical beam (12) respectively, and the second inlet (306) and the second outlet (307) are arranged close to the third vertical beam (13) and the fourth vertical beam (14) respectively, and
the first inlet (304) communicates with the flow channel (111) of the first vertical beam (11), the first outlet (305) communicates with the flow channel (111) of the second vertical beam (12), the second inlet (306) communicates with the flow channel (111) of the third vertical beam (13), and the second outlet (307) communicates with the flow channel (111) of the fourth vertical beam (14).

2. The energy storage rack (10) according to claim 1, wherein each of the battery packs (31, 32) comprises a panel (301), the first inlet (304) and the first outlet (305) are arranged on the panel (301) of the first battery pack (31), the second inlet (306) and the second outlet (307) are arranged on the panel (301) of the second battery pack (32), the panel (301) of the first battery pack (31) is located on a side surface of the first battery pack (31) close to the first vertical beam (11) and the second vertical beam (12), and the panel (301) of the second battery pack (32) is located on a side surface of the second battery pack (32) close to the third vertical beam (13) and the fourth vertical beam (14).

3. The energy storage rack (10) according to claim 2, wherein each of the battery packs (31, 32) comprises a housing body (302) and a battery assembly (303), the panel (301) and the housing body (302) are detachably connected, and the battery, assembly (303) is arranged in a space surrounded by the housing body (302) and the panel (301).

4. The energy storage rack (10) according to claim 2, wherein the panel (301) is provided with a communication port (310) and a charging and discharging port (309).

5. The energy storage rack (10) according to claim 1, further comprising a plurality of connecting pipe (17)s arranged corresponding to the first inlet (304), the first outlet (305), the second inlet (306), and the second outlet (307), wherein the first inlet (304) communicates with the flow channel (111) of the first vertical beam (11) through corresponding one of the connecting pipes (17), the first outlet (305) communicates with the flow channel (111) of the second vertical beam (12) through corresponding one of the connecting pipes (17), the second inlet (306) communicates with the flow channel (111) of the third vertical beam (13) through corresponding one of the connecting pipes (17), and the second outlet (307) communicates with the flow channel (111) of the fourth vertical beam (14) through corresponding one of the connecting pipes (17).

6. The energy storage rack (10) according to claim 5, wherein each of the connecting pipes (17) is a flexible hose.

7. The energy storage rack (10) according to claim 5, wherein each of the first inlet (304), the first outlet (305), the second inlet (306), and the second outlet (307) is provided with a quick connector, and each of the first inlet (304), the first outlet (305), the second inlet (306), and the second outlet (307) communicates with corresponding one of the connecting pipes (17) through the quick connector.

8. The energy storage rack (10) according to claim 1, wherein the frame (1) further comprises a plurality of connecting members (16), and the connecting members (16) are respectively connected to the four vertical beams and are arranged sequentially in the first direction (α) to form the accommodation spaces (18) in the frame (1).

9. The energy storage rack (10) according to claim 8, wherein the frame (1) further comprises auxiliary supporting beams (15) arranged in the first direction (α) and respectively connected to each of the connecting members (16).

10. The energy storage rack (10) according to claim 1, wherein a general communicating port (102) is provided on an end portion of each of the vertical beams corresponding to the vertical beam, and the general communicating port (102) communicates with the flow channel (111) in the vertical beam.

11. An energy storage container comprising:
a container body (20); and
a plurality of energy storage racks (10) arranged in the container body (20) according to any one of claims 1 to 10, wherein the energy storage racks (10) are arranged side by side in a third direction (γ) perpendicular to the first direction (α) and the second direction (β).

12. The energy storage container according to claim 11, wherein the first vertical beam (11) is spaced apart from the second vertical beam (12) in the third direction (γ), the first battery pack (31) enters and exits the accommodation space (18) through a gap between the first vertical beam (11) and the second vertical beam (12), the third vertical beam (13) is spaced apart from the fourth vertical beam (14) in the third direction (γ), and the second battery pack (32) enters and exits the accommodation space (18) through a gap between the third vertical beam (13) and the fourth vertical beam (14).

13. The energy storage container according to claim 11, wherein the two vertical beams that are close to each other between adjacent two of the energy storage racks (10) are combined into an integrated vertical beam (101), and two of the flow channels (111) in the integrated vertical beam (101) are separated from each other.

14. The energy storage container according to claim 11, wherein container doors (21) are provided on a side surface of the container body (20) relative to the energy storage racks (10) in the second direction (β).

15. The energy storage container according to claim 11, wherein the energy storage racks (10) are arranged side by side into two energy storage aggregates (100) spaced apart from each other in the second direction (β), and a gap between the two energy storage aggregates (100) is used for an operator to pass through.

## Patentansprüche

1. Energiespeichergestell (10), das umfasst:
einen Rahmen (1), der mit einer Vielzahl von Schichten von Aufnahmeräumen (18) bereitgestellt wird, die in einer ersten Richtung (α) gestapelt sind, wobei der Rahmen (1) vier vertikale Träger umfasst, die in der ersten Richtung (α) angeordnet sind,
wobei die vier vertikalen Träger ein erster vertikaler Träger (11), ein zweiter vertikaler Träger (12), ein dritter vertikaler Träger (13) und ein vierter vertikaler Träger (14) sind, und ein Strömungskanal (111) in jedem der vier vertikalen Träger angeordnet ist,
in einer zweiten Richtung (β) senkrecht zu der ersten Richtung (α) angeordnet ist, der erste vertikale Träger (11) und der zweite vertikale Träger (12) sich auf einer Seite der Aufnahmeräume (18) befinden und der dritte vertikale Träger (13) und der vierte vertikale Träger (14) sich auf der anderen Seite der Aufnahmeräume (18) gegenüber dem ersten vertikalen Träger (11) und dem zweiten vertikalen Träger (12) befinden,
in jedem Aufnahmeraum (18) jeder Schicht zwei Batteriepacks (31, 32) angeordnet sind, die beiden Batteriepacks (31, 32) jeweils ein erstes Batteriepack (31) und ein zweites Batteriepack (32) sind,
das erste Batteriepack (31) nahe dem ersten vertikalen Träger (11) und dem zweiten vertikalen Träger (12) angeordnet ist und das zweite Batteriepack (32) nahe dem dritten vertikalen Träger (13) und dem vierten vertikalen Träger (14) angeordnet ist,
das erste Batteriepack (31) einen ersten Einlass (304) für den Einstrom eines Wärmetauschermediums und einen ersten Auslass (305) für den Ausstrom des Wärmetauschermediums aufweist und das zweite Batteriepack (32) einen zweiten Einlass (306) für den Einstrom des Wärmetauschermediums und einen zweiten Auslass (307) für den Ausstrom des Wärmetauschermediums aufweist,
in jedem der Batteriepacks ein Wärmeaustausch-Strömungskanal (308) bereitgestellt wird, der Wärmeaustausch-Strömungskanal (308) des ersten Batteriepacks (31) mit dem ersten Einlass (304) und dem ersten Auslass (305) in Verbindung steht und der Wärmeaustausch-Strömungskanal (308) des zweiten Batteriepacks (32) mit dem zweiten Einlass (306) und dem zweiten Auslass (307) in Verbindung steht,
der erste Einlass (304) und der erste Auslass (305) jeweils nahe dem ersten vertikalen Träger (11) und dem zweiten vertikalen Träger (12) angeordnet sind und der zweite Einlass (306) und der zweite Auslass (307) jeweils nahe dem dritten vertikalen Träger (13) und dem vierten vertikalen Träger (14) angeordnet sind und
der erste Einlass (304) mit dem Strömungskanal (111) des ersten vertikalen Trägers (11) in Verbindung steht, der erste Auslass (305) mit dem Strömungskanal (111) des zweiten vertikalen Trägers (12) in Verbindung steht, der zweite Einlass (306) mit dem Strömungskanal (111) des dritten vertikalen Trägers (13) in Verbindung steht und der zweite Auslass (307) mit dem Strömungskanal (111) des vierten vertikalen Trägers (14) in Verbindung steht.

2. Energiespeichergestell (10) gemäß Anspruch 1, wobei jedes der Batteriepacks (31, 32) eine Platte (301) umfasst, der erste Einlass (304) und der erste Auslass (305) auf der Platte (301) des ersten Batteriepacks (31) angeordnet sind, der zweite Einlass (306) und der zweite Auslass (307) auf der Platte (301) des zweiten Batteriepacks (32) angeordnet sind, die Platte (301) des ersten Batteriepacks (31) auf einer Seitenfläche des ersten Batteriepacks (31) nahe dem ersten vertikalen Träger (11) und dem zweiten vertikalen Träger (12) angeordnet ist, und die Platte (301) des zweiten Batteriepacks (32) an einer Seitenfläche des zweiten Batteriepacks (32) nahe dem dritten vertikalen Träger (13) und dem vierten vertikalen Träger (14) angeordnet ist.

3. Energiespeichergestell (10) gemäß Anspruch 2, wobei jedes der Batteriepacks (31, 32) einen Gehäusekörper (302) und eine Batterieanordnung (303) umfasst, die Platte (301) und der Gehäusekörper (302) lösbar miteinander verbunden sind und die Batterieanordnung (303) in einem Raum angeordnet ist, der von dem Gehäusekörper (302) und der Platte (301) umgeben ist.

4. Energiespeichergestell (10) gemäß Anspruch 2, wobei die Platte (301) mit einem Kommunikationsanschluss (310) und einem Lade- und Entladeanschluss (309) bereitgestellt ist.

5. Energiespeichergestell (10) gemäß Anspruch 1, das ferner eine Vielzahl von Verbindungsrohren (17) umfasst, die entsprechend dem ersten Einlass (304), dem ersten Auslass (305), dem zweiten Einlass (306) und dem zweiten Auslass (307) angeordnet sind, wobei der erste Einlass (304) über ein entsprechendes der Verbindungsrohre (17) mit dem Strömungskanal (111) des ersten vertikalen Trägers (11) in Verbindung steht, der erste Auslass (305) über ein Entsprechendes der Verbindungsrohre (17) mit dem Strömungskanal (111) des zweiten vertikalen Trägers (12) in Verbindung steht, der zweite Einlass (306) mit dem Strömungskanal (111) des dritten vertikalen Trägers (13) über ein Entsprechendes der Verbindungsrohre (17) in Verbindung steht und der zweite Auslass (307) mit dem Strömungskanal (111) des vierten vertikalen Trägers (14) über ein Entsprechendes der Verbindungsrohre (17) in Verbindung steht.

6. Energiespeichergestell (10) gemäß Anspruch 5, wobei jedes der Verbindungsrohre (17) ein flexibler Schlauch ist.

7. Energiespeichergestell (10) gemäß Anspruch 5, wobei jeder von dem ersten Einlass (304), dem ersten Auslass (305), dem zweiten Einlass (306) und dem zweiten Auslass (307) mit einem Schnellverbinder bereitgestellt sind und jeder von dem ersten Einlass (304), dem ersten Auslass (305), dem zweiten Einlass (306) und dem zweiten Auslass (307) mit einem Entsprechenden der Verbindungsrohre (17) über den Schnellverbinder in Verbindung steht.

8. Energiespeichergestell (10) gemäß Anspruch 1, wobei der Rahmen (1) ferner eine Vielzahl von Verbindungselementen (16) umfasst und die Verbindungselemente (16) jeweils mit den vier vertikalen Trägern verbunden sind und nacheinander in der ersten Richtung (α) angeordnet sind, um die Aufnahmeräume (18) in dem Rahmen (1) zu bilden.

9. Energiespeichergestell (10) gemäß Anspruch 8, wobei der Rahmen (1) ferner Hilfsstützträger (15) umfasst, die in der ersten Richtung (α) angeordnet sind und jeweils mit jedem der Verbindungselemente (16) verbunden sind.

10. Energiespeichergestell (10) gemäß Anspruch 1, wobei ein allgemeiner Verbindungsanschluss (102) an einem Endabschnitt jedes der vertikalen Träger entsprechend dem vertikalen Träger bereitgestellt wird und der allgemeine Verbindungsanschluss (102) mit dem Strömungskanal (111) in dem vertikalen Träger in Verbindung steht.

11. Energiespeicherbehälter, umfassend:
einen Behälterkörper (20); und eine Vielzahl von Energiespeichergestellen (10), die in dem Behälterkörper (20) gemäß einem der Ansprüche 1 bis 10 angeordnet sind, wobei die Energiespeichergestelle (10) nebeneinander in einer dritten Richtung (β) senkrecht zu der ersten Richtung (α) und der zweiten Richtung (β) angeordnet sind.

12. Energiespeicherbehälter gemäß Anspruch 11, wobei der erste vertikale Träger (11) in der dritten Richtung (β) von dem zweiten vertikalen Träger (12) beabstandet ist, das erste Batteriepack (31) durch einen Spalt zwischen dem ersten vertikalen Träger (11) und dem zweiten vertikalen Träger (12) in den Aufnahmeraum (18) eintritt und aus diesem austritt, der dritte vertikale Träger (13) in der dritten Richtung (γ) von dem vierten vertikalen Träger (14) beabstandet ist und das zweite Batteriepack (32) durch einen Spalt zwischen dem dritten vertikalen Träger (13) und dem vierten vertikalen Träger (14) in den Aufnahmeraum (18) eintritt und aus diesem austritt.

13. Energiespeicherbehälter gemäß Anspruch 11, wobei die beiden vertikalen Träger, die zwischen zwei benachbarten Energiespeichergestellen (10) nahe beieinander liegen, zu einem integrierten vertikalen Träger (101) kombiniert sind und zwei der Strömungskanäle (111) in dem integrierten vertikalen Träger (101) voneinander getrennt sind.

14. Energiespeicherbehälter gemäß Anspruch 11, wobei Behältertüren (21) an einer Seitenfläche des Behälterkörpers (20) relativ zu den Energiespeichergestellen (10) in der zweiten Richtung (β) bereitgestellt werden.

15. Energiespeicherbehälter gemäß Anspruch 11, wobei die Energiespeichergestelle (10) nebeneinander in zwei Energiespeicher-Aggregaten (100) angeordnet sind, die in der zweiten Richtung (β) voneinander beabstandet sind, und ein Spalt zwischen den beiden Energiespeicher-Aggregaten (100) als Durchgang für einen Bediener dient.

## Revendications

1. Bâti de stockage d'énergie (10), comprenant :
un cadre (1) doté de plusieurs couches d'espaces de logement (18) empilées dans une première direction (α), dans lequel le cadre (1) comprend quatre poutres verticales disposées dans la première direction (α), les quatre poutres verticales sont : une première poutre verticale (12), une deuxième poutre verticale (12), une troisième poutre verticale (13) et une quatrième poutre verticale (14) et un canal d'écoulement (111) est disposé dans chacune des quatre poutres verticales,
dans une deuxième direction (β) perpendiculaire à la première direction (α), la première poutre verticale (11) et la deuxième poutre verticale (12) sont situées sur un côté des espaces de logement (18), et la troisième poutre verticale (13) et la quatrième poutre verticale (14) sont situées de l'autre côté des espaces de logement (18), à l'opposé de la première poutre verticale (11) et de la deuxième poutre verticale (12),
deux blocs-batteries (31, 32) sont disposés dans chacun des espaces de logement (18) de chaque couche, les deux blocs-batteries (31, 32) sont respectivement un premier bloc-batterie (31) et un deuxième bloc-batterie (32), le premier bloc-batterie (31) est disposé à proximité de la première poutre verticale (11) et de la deuxième poutre verticale (12) et le deuxième bloc-batterie (32) est disposé à proximité de la troisième poutre verticale (13) et la quatrième poutre verticale (14),
le premier bloc-batterie (31) comporte une première entrée (304) pour l'admission du fluide caloporteur et une première sortie (305) pour l'évacuation du fluide caloporteur, et le deuxième bloc-batterie (32) comporte une deuxième entrée (306) pour l'admission du fluide caloporteur et une deuxième sortie (307) pour l'évacuation du fluide caloporteur,
un canal d'échange thermique (308) est prévu dans chacun des blocs-batteries, le canal d'échange thermique (308) du premier bloc-batterie (31) communique avec la première entrée (304) et la première sortie (305) et le canal d'échange thermique (308) du deuxième bloc-batterie (32) communique avec la deuxième entrée (306) et la deuxième sortie (307),
la première entrée (304) et la première sortie (305) sont disposées à proximité de la première poutre verticale (11) et de la deuxième poutre verticale (12), respectivement, et la deuxième entrée (306) et la deuxième sortie (307) sont disposées à proximité de la troisième poutre verticale (13) et de la quatrième poutre verticale (14) respectivement, et
la première entrée (304) communique avec le canal d'écoulement (111) de la première poutre verticale (11), la première sortie (305) communique avec le canal d'écoulement (111) de la deuxième poutre verticale (12), la deuxième entrée (306) communique avec le canal d'écoulement (111) de la troisième poutre verticale (13) et la deuxième sortie (307) communique avec le canal d'écoulement (111) de la quatrième poutre verticale (14).

2. Bâti de stockage d'énergie (10) selon la revendication 1, dans lequel chacun des blocs-batteries (31, 32) comprend un panneau (301), la première entrée (304) et la première sortie (305) sont disposées sur le panneau (301) du premier bloc-batterie (31), la deuxième entrée (306) et la deuxième sortie (307) sont disposées sur le panneau (301) du deuxième bloc-batterie (32), le panneau (301) du premier bloc-batterie (31) est situé sur une surface latérale du premier bloc-batterie (31) à proximité de la première poutre verticale (11) et de la deuxième poutre verticale (12) et le panneau (301) du deuxième bloc-batterie (32) est situé sur une surface latérale du deuxième bloc-batterie (32) à proximité de la troisième poutre verticale (13) et de la quatrième poutre verticale (14).

3. Bâti de stockage d'énergie (10) selon la revendication 2, dans lequel chacun des blocs-batteries (31, 32) comprend un boîtier (302) et un ensemble de batterie (303), le panneau (301) et le boîtier (302) étant raccordés de manière amovible, et l'ensemble de batterie (303) est disposé dans un espace entouré par le boîtier (302) et le panneau (301).

4. Bâti de stockage d'énergie (10) selon la revendication 2, dans lequel le panneau (301) est doté d'un port de communication (310) et d'un port de charge et de décharge (309).

5. Bâti de stockage d'énergie (10) selon la revendication 1, comprenant en outre une pluralité de tuyaux de raccordement (17) disposés en correspondance avec la première entrée (304), la première sortie (305), la deuxième entrée (306) et la deuxième sortie (307), dans lequel la première entrée (304) communique avec le canal d'écoulement (111) de la première poutre verticale (11) via un des tuyaux de raccordement (17) correspondants, la première sortie (305) communique avec le canal d'écoulement (111) de la deuxième poutre verticale (12) via un des tuyaux de raccordement (17) correspondants, la deuxième entrée (306) communique avec le canal d'écoulement (111) de la troisième poutre verticale (13) via un des tuyaux de raccordement (17) correspondants et la deuxième sortie (307) communique avec le canal d'écoulement (111) de la quatrième poutre verticale (14) via un des tuyaux de raccordement (17) correspondants.

6. Bâti de stockage d'énergie (10) selon la revendication 5, dans lequel chaque tuyau de raccordement (17) est un tuyau flexible.

7. Bâti de stockage d'énergie (10) selon la revendication 5, dans lequel la première entrée (304), la première sortie (305), la deuxième entrée (306) et la deuxième sortie (307) sont équipées d'un connecteur rapide, et chacune de la première entrée (304), la première sortie (305), la deuxième entrée (306) et la deuxième sortie (307) communique un des tuyaux de raccordement correspondants (17) par l'intermédiaire du connecteur rapide.

8. Bâti de stockage d'énergie (10) selon la revendication 1, dans lequel le cadre (1) comprend en outre une pluralité d'éléments de liaison (16), lesquels sont respectivement raccordés aux quatre poutres verticales et disposés séquentiellement dans la première direction (α) pour former les espaces de logement (18) dans le bâti (1).

9. Bâti de stockage d'énergie (10) selon la revendication 8, dans lequel le cadre (1) comprend en outre des poutres de support auxiliaires (15) disposées dans la première direction (α) et respectivement raccordées à chacun des éléments de liaison (16).

10. Bâti de stockage d'énergie (10) selon la revendication 1, dans lequel un orifice de communication général (102) est prévu sur une partie d'extrémité de chacune des poutres verticales correspondant à la poutre verticale et l'orifice de communication général (102) communique avec le canal d'écoulement (111) dans la poutre verticale.

11. Récipient de stockage d'énergie comprenant :
un corps de récipient (20) ; et
une pluralité de supports de stockage d'énergie (10) disposés dans le corps du récipient (20) selon une quelconque des revendications 1 à 10, dans lequel les supports de stockage d'énergie (10) sont disposés côte à côte dans une troisième direction (Y) perpendiculaire à la première direction (α) et à la deuxième direction (β).

12. Récipient de stockage d'énergie selon la revendication 11, dans lequel la première poutre verticale (11) est espacée de la deuxième poutre verticale (12) dans la troisième direction (Y), le premier bloc-batterie (31) entre et sort de l'espace de logement (18) via un espace entre la première poutre verticale (11) et la deuxième poutre verticale (12), la troisième poutre verticale (13) est espacée de la quatrième poutre verticale (14) dans la troisième direction, et le deuxième bloc-batterie (32) entre et sort de l'espace de logement (18) via un espace entre la troisième poutre verticale (13) et la quatrième poutre verticale (14).

13. Récipient de stockage d'énergie selon la revendication 11, dans lequel les deux poutres verticales qui sont proches l'une de l'autre entre deux bâtis de stockage d'énergie adjacents (10) sont combinées en une poutre verticale intégrée (101) et deux des canaux d'écoulement (111) de la poutre verticale intégrée (101) sont séparés l'un de l'autre.

14. Récipient de stockage d'énergie selon la revendication 11, dans lequel des portes (21) sont prévues sur une surface latérale du corps du récipient (20) par rapport aux bâtis de stockage d'énergie (10) dans la deuxième direction (β).

15. Récipient de stockage d'énergie selon la revendication 11, dans lequel les bâtis de stockage d'énergie (10) sont disposés côte à côte en deux groupes de stockage d'énergie (100) espacés l'un de l'autre dans la deuxième direction (β) et un espace entre les deux groupes de stockage d'énergie (100) est utilisé pour le passage d'un opérateur.
